**Europäisches Patentamt**

**European Patent Office**

**Office européen des brevets**

(11) Numéro de publication : **0 408 504 B1**

(12) ## FASCICULE DE BREVET EUROPEEN

(45) Date de publication du fascicule du brevet :
**21.12.94 Bulletin 94/51**

(51) Int. Cl.$^5$ : **G05B 19/405**

(21) Numéro de dépôt : **90810509.1**

(22) Date de dépôt : **05.07.90**

(54) **Procédé de commande d'une machine à coudre et machine à coudre mettant en oeuvre ce procédé.**

(30) Priorité : **11.07.89 CH 2582/89**

(43) Date de publication de la demande :
**16.01.91 Bulletin 91/03**

(45) Mention de la délivrance du brevet :
**21.12.94 Bulletin 94/51**

(84) Etats contractants désignés :
**CH DE ES FR GB IT LI NL SE**

(56) Documents cités :
**WO-A-86/06423**
**FR-A- 2 423 572**
**US-A- 4 557 207**

(73) Titulaire : **MEFINA S.A.**
**82 Rue de Lausanne**
**CH-1701 Fribourg (CH)**

(72) Inventeur : **Tschopp, Gérard**
**C/o Dussex,**
**10, rue du Contral-Social**
**CH-1203 Génève (CH)**
Inventeur : **Buchilly, Claude**
**15, rue des Deux-Marchés**
**CH-1800 Vevey (CH)**
Inventeur : **Kohli, Christian Robert**
**14B, route de Jussy**
**CH-1226 Thonex (CH)**

(74) Mandataire : **Dousse, Blasco et al**
**7, route de Drize**
**CH-1227 Carouge/Genève (CH)**

## Description

La présente invention a pour objet un procédé de commande d'une machine à coudre, en particulier d'une machine comprenant une aiguille mobile axialement, un dispositif d'entrainement de l'aiguille selon un mouvement axial alterné, un mécanisme de commande du déplacement relatif, en translation, de l'aiguille et du matériau à coudre, un capteur de boucle et son dispositif de commande, des moyens pour piloter en synchronisme les dits mécanismes et le dispositif, agencés de manière à coudre sur le matériau des motifs formés chacun par une pluralité de blocs de points et dont au moins une portion de leur profil englobe au moins une série de deux points adjacents résultant d'un déplacement relatif du tissu et de l'aiguille, d'amplitude et/ou d'orientation différentes de point à point, cette machine comprenant en outre un organe de commande desdits moyens et du dispositif, permettant d'accroître, respectivement de diminuer la longueur de base d'un motif tout en conservant constante la densité des points cousus.

Le brevet français N° 2423572 envisage notamment la mise en oeuvre, aux mêmes fins, d'un procédé de ce genre, plus particulièrement pour la réalisation de motifs en forme de pointe de flèche, de longueur variable, et préconise, à cet effet, d'insérer entre les paires de points d'un motif de base une ou plusieurs paires de points complémentaires, l'écartement des points de chaque paire ainsi insérée devant être calculé par le microprocesseur de gestion de la machine, par extrapolation des valeurs d'écartement des points du motif de base. Ce document ne donne toutefois aucune précision sur la manière effective de procéder de la sorte, restant en particulier totalement muet sur le point de savoir comment le microprocesseur doit opérer lorsqu'il conviendrait d'insérer plus d'une paire de points nouveaux entre deux paires successives de points du motif de base. En outre, ce document ne donne aucune information sur la manière de procéder lorsqu'il s'agit de coudre un motif de longueur inférieure à celle du motif standard.

Le document US 4.599.959 traite, lui aussi, de l'obtention de motifs de longueur différente de celle, standard, d'un motif donné. Toutefois, le procédé proposé ne permet d'atteindre le but visé qu'en modifiant l'écartement, dans le sens du transport du tissu, des divers points que comporte le motif standard, sans intervenir sur le nombre de tels points. Il s'ensuit qu'un motif allongé de la sorte comportera, entre les points successifs, des "jours" d'autant plus grands que l'allongement désiré sera grand. Vice versa, dans le cas d'un raccourcissement d'un motif standard, la densité des points du motif deviendra d'autant plus élevée que le raccourcissement souhaité pour un motif donné sera important : s'agissant d'un motif décoratif, l'aspect esthétique en deviendra d'autant plus douteux que le raccourcissement du motif aura été important.

Quant à la demande internationale WO86/06423, elle envisage également une machine à coudre qui devrait, notamment, permettre de coudre des motifs de longueur différente de celle de motifs standard en modifiant la distance entre points cousus en fonction de la longueur désirée pour le nouveau motif, de manière à assurer le maintien d'une densité constante, par unité de surface, des points à coudre. Ce document, s'il indique bien que cette tâche devrait être accomplie par le microprocesseur de la machine à coudre, ne donne aucune information sur "comment" celui-ci devrait s'y prendre, soit à partir de quel type d'instructions particulières, adaptées à cette tâche.

Les revendications 1 et 2 définissent précisément quelles caractéristiques essentielles présente le procédé selon l'invention pour obtenir qu'une machine à coudre à microprocesseur soit à même de réaliser la couture de motifs de longueur variable, supérieure ou inférieure à la longueur de motifs standard correspondants, dont la densité de points par unité de surface demeure inchangée, quelle que soit la longueur des motifs, et dont l'aspect s'apparente à celui des motifs standard dont ils sont issus.

L'invention a également pour objet une machine à coudre pour la mise en oeuvre de ce procédé, dont les particularités sont indiquées dans les revendications 3 à 5.

Le dessin annexé illustre, à titre d'exemple, le procédé selon l'invention ainsi qu'une machine à coudre pour sa mise en oeuvre :

La figure 1 est une vue en élévation de face de la machine;

La figure 2 montre un détail du bottier de cette machine, à plus grande échelle;

Les figures 3, 4 et 5 représentent, en grandeur nature, un motif de couture tel qu'apparaissant sur un matériau à coudre, par exemple sur une pièce de tissu, respectivement sous sa dimension et forme originales, élongé de 75 % et élongé de 125%;

Les figures 3A, 4A, 5A montrent des motifs correspondants aux motifs des figures 3 à 5, mais représentés avec un agrandissement de cinq fois;

Les figures 3B, 4B et 5B sont des vues partielles et schématiques des mêmes motifs faisant l'objet des figures 3 à 5 mais illustrées avec un agrandissement de quinze fois.

La figure 6 montre une portion du schéma de la commande informatisée de la machine à coudre selon l'invention;

La figure 7 est une diagramme séquentiel illustrant la fonction "élongation" susceptible d'être mise en oeuvre par cette machine.

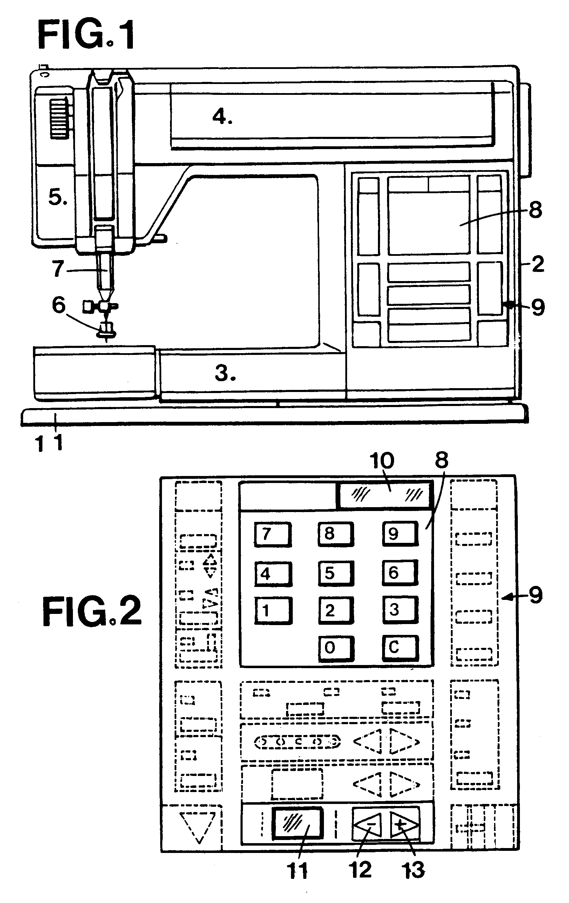

La machine représentée sur la figure 1 comporte, de façon traditionnelle, un socle 1 sur lequel se dresse une colonne 2 portant un bras libre 3 et un bras supérieur 4 à l'extrémité duquel est disposée une tête de couture 5.

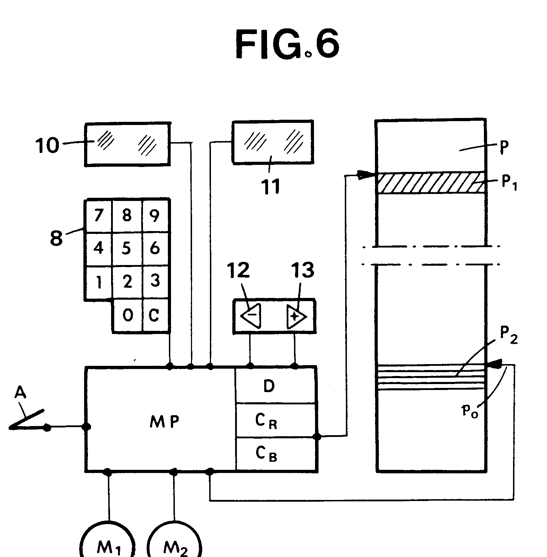

Dans le bras libre est placé un mécanisme, $M_1$ (fig. 6), pour la commande d'un capteur de boucle et d'un dispositif d'entraînement en translation du matériau à coudre, non représentés.

De façon connue, le capteur de boucle est appelé à coopérer en synchronisme avec une aiguille mobile 6 fixée à l'extrémité d'une barre-aiguille 7 entraînée en mouvement vertical et transversal (mouvement de jetée) par un mécanisme de commande $M_2$ (fig. 6) disposé dans la tête 5 et dans le bras 4.

La machine à coudre représentée est une machine à commande par microprocesseur MP (fig. 6) c'est-à-dire une machine dans laquelle les différentes données des motifs à coudre sont stockées dans une mémoire électronique P, ROM ou PROM par exemple, et qui peuvent être appelées, pour exécution par la machine d'un motif correspondant, par programmation manuelle à l'aide d'un clavier numérique 8 comportant dix touches 0 à 9 (figures 1 et 2) ainsi qu'une touche d'effacement C, le tout faisant partie d'un tableau de commande 9 disposé sur la face antérieure de la colonne 2 de la machine.

Un tel tableau comporte, usuellement, une pluralité d'autres touches de commande et d'affichages destinés à permettre la mise en action et / ou la visualisation des caractéristiques propres à chaque fonction et / ou de leur bon déroulement. En l'espèce, les affichages et les touches concernés par la présente invention ont été représentés en trait plein au dessin, les autres éléments étant esquissés en traitillé.

C'est ainsi que 10 représente un dispositif d'affichage, par exemple de type LCD ou à diodes luminescentes, destiné à indiquer le numéro programmé par action sur les touches 0 à 9 du clavier 8. Ce dispositif pourrait afficher un, deux, voire trois digits, selon la nature du code d'entrée de chaque motif à coudre.

Au bas du tableau de commande 9, est disposé un second dispositif d'affichage 11 qui peut, lui aussi, être de type LCD ou à diodes luminescentes, et, à la droite de celui-ci, deux touches triangulaires 12 et 13.

Le microprocesseur MP tel que représenté schématiquement englobe deux compteurs $C_R$ et $C_B$ ainsi qu'un organe de temporisation D : l'utilité de ces trois moyens apparaîtra par la suite.

Un actuateur A permet la commande de la mise en marche et de l'arrêt de la machine à coudre décrite (figure 6).

Les touches 12 et 13 permettent de commander, par exemple par action sur la seule touche 13, un accroissement de la longueur des divers motifs susceptibles d'être selectionnés par le clavier B, et cousus par la machine, respectivement une diminution de cette longueur, par action sur la touche 12. Dans un cas comme dans l'autre l'importance de telles variations fait l'objet d'une indication quantitative correspondante apparaissant sur le dispositif d'affichage 11. Cette indication se présentera, par exemple, sous la forme du chiffre 1.25, si le motif est allongé de 25 %, ou du chiffre 0.75 s'il est raccourci de cette même quantité.

Ce type de fonction et les moyens qui permettent de la réaliser, notamment dans les machines à coudre à microprocesseur, étant bien connus de l'homme de l'art, on ne s'étendra pas d'avantage sur ce point.

On rappellera cependant que, dès qu'on désire allonger un motif, un tel allongement est obtenu en augmentant simplement la longueur du pas du transport (c'est-à-dire de l'avance incrémentale du matériau à coudre ayant lieu au fur et à mesure de la couture) proportionnellement à l'allongement désiré. La machine procède de façon inverse quand un motif doit être raccourci.

Il en découle que la densité des points cousus par unité de surface du matériau qui les supporte décroit en proportion inverse de l'allongement désiré alors qu'elle croit selon la même loi en fonction du raccourcissement du motif, lorsqu'il a été fait choix de cette dernière opportunité.

S'agissant notamment de motifs à base de points "bourdon", on conçoit que l'aspect général de tels motifs allongés ou raccourcis de la manière citée puisse devenir passablement altéré par rapport à celui du motif original

Cette différence d'aspect est due en majeure partie au fait que, si un motif donné est allongé de la manière indiquée ci-dessus, vu que le nombre de points cousus demeurera constant, le nouveau motif obtenu se présentera avec des "jours" apparaîssant entre les différentes sections cousues, jours qui seront évidemment d'autant plus importants que l'allongement des motifs sera grand.

Vice-versa, dans le cas d'un raccourcissement d'un motif, la densité du fil pourra devenir trop élevée, notamment si l'importance d'un tel raccourcissement est grande. L'aspect du motif résultant sera alors très détérioré en surface, les fils des divers points étant susceptibles de se chevaucher et de se superposer de façon imprévisible et irrégulière.

L'invention vise précisément à écarter l'un et l'autre inconvénients ci-dessus.

Elle propose, à cet effet, d'adjoindre aux diverses fonctions classiques pour les machines à coudre modernes, y compris celle d'allongement ou de raccourcissement de la longueur d'un motif, obtenue par simple variation de la longueur du pas unitaire du transport du matériau à coudre, une fonction dite d'"élongation" grâce à laquelle il sera possible, à partir d'un motif de base, de longueur standard, d'obtenir un autre motif de profil général s'apparentant au profil d'origine du motif de base, dans un rapport homothétique quasiment parfait, et dont la densité de point par unité de longueur du motif élongé demeurera identique à la densité du motif de base correspondant, cela parce que le pas du transport restera le même pour le motif de base et pour le motif élongé.

Dans la description qui va suivre, l'élongation sera dite "positive" si le motif élongé résultant présentera une longueur hors tout supérieure à la longueur du motif de base; elle sera dite "négative", si la longueur du motif élongé sera inférieure à celle du motif de base.

En pratique, avec la machine à coudre selon l'invention, la fonction élongation sera mise en oeuvre par actionnement simultané des deux touches 12 et 13, celles-là même qui permettent de commander individuellement les fonctions "raccourcissement" et "allongement" d'un motif, respectivement.

Comme on le verra par la suite, la simultanéité d'actionnement des touches 12 et 13 étant physiologiquement impossible à réaliser, la fonction "élongation" pourra être obtenue dès lors que ces touches auront été actionnées successivement au moins dans un délai de l'ordre de 1 à 2 secondes, délai fixé par l'organe de temporisation D déja cité.

On signalera encore que la description et les dessins auxquels elle se réfère traiteront spécifiquement de l'élongation de motifs à base de point "bourdon", c'est-à-dire de motifs constitués par une succession de "blocs" de points obtenus de façon connue, par la série d'opérations ci-après:

- transport du matériau à coudre sur la longueur d'un pas,
- mouvement de jetée de l'aiguille à coudre et piqué du matériau,
- nouveau transport du matériau à coudre,
- nouveau mouvement de jetée et piqué.

Il va sans dire que toutes les explications qui vont être données demeureront valables pour la couture de motifs élaborés à l'aide de blocs de points obtenus par un seul transport suivi d'un mouvement de jetée unique. Il en sera de même pour tout motif dont les blocs de points auront été obtenus par succession de plus de deux paires de "transports" et de "jetées".

De façon tout à fait générale, le procédé qui va être décrit pourra également être mis en oeuvre avec des machines à coudre dans lesquelles l'aiguille n'effectue aucun mouvement de jetée, le matériau à coudre étant, lui, entrainé successivement selon deux directions orthogonales par un cadre support.

Ainsi, quelle que soit la structure de la machine à coudre utilisée, on peut dire qu'un bloc de points sera le résultat de la mise en oeuvre d'un ensemble de données se traduisant, entre deux piqués successifs de l'aiguille, par un déplacement relatif, selon deux directions orthogonales, de cette aiguille et du matériau à coudre.

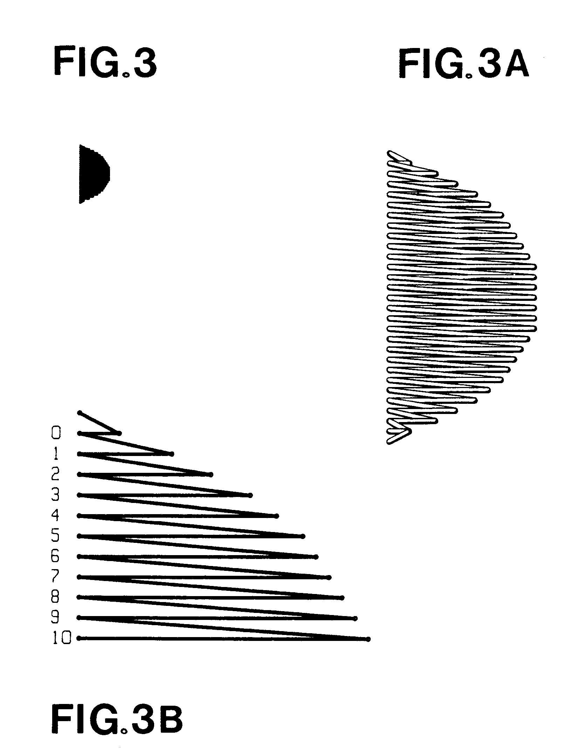

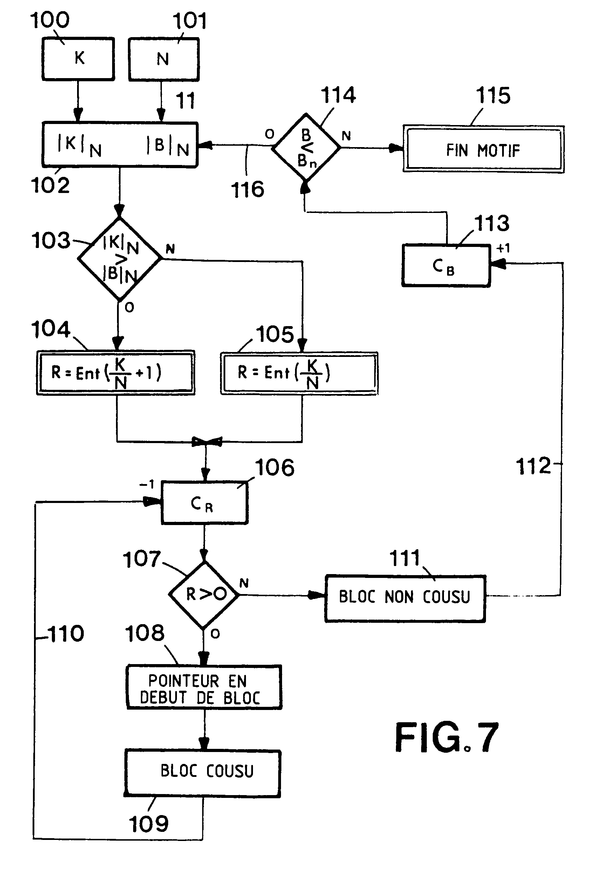

Après sélection d'un motif de base, tel celui illustré sur la figure 3, par actionnement des touches du clavier 8 (introduction d'un code à un, deux ou trois digits correspondant au motif choisi) et actionnement des touches 12 et 13 au moins dans le délai cité, le microprocesseur MP de la machine à coudre va commander et faire exécuter un processus de fonctionnement qui va maintenant être décrit en se référant notamment aux figures 6 et 7.

On signalera tout d'abord que, selon l'invention, la manière avec laquelle ce processus se déroulera est liée directement aux conditions dans lesquelles doit être obtenue l'élongation désirée, qui sont soit dictées "à priori" par la machine elle-même, c'est-à-dire par certains paramètres de fonctionnement fixés en usine, soit imposées par l'usager.

Les paramètres dictés par la machine sont en effet:

a) nombre de blocs de points que comporte chaque motif de base,

b) valeur en % de l'incrément I d'élongation obtenue par un seul actionnement de la touche 12 ou de la touche 13 après que la fonction "élongation" ait été mise en oeuvre de la façon décrite.

Le paramètre imposé par l'usager sera essentiellement celui découlant du type de touche 12 ou 13 actionné pour obtenir l'élongation de type négatif ou positif désirée et du nombre de tels actionnements, lequel fixera la longueur du motif élongé et, par voie de conséquence, le nombre de blocs devant être cousus.

Comme déjà indiqué, ce nombre sera supérieur au nombre de blocs du motif de base, si le motif élongé devra avoir une longueur supérieure à celle du motif de base. Il sera par contre inférieur en cas contraire.

Le nombre de blocs d'un motif élongé sera proportionnel au nombre de blocs que comporte le motif de base dont il est issu dans le rapport direct des longueurs hors tout de ces deux motifs: de ce fait, la densité de points demeurera la même dans le motif élongé qu'elle ne l'était dans le motif de base.

De plus, aux fins d'obtenir un motif élongé dont l'aspect demeurera similaire à celui d'un motif de base correspondant, l'invention propose, lorsque l'élongation désirée sera "positive" de faire en sorte que, lors de la couture du motif élongé, la machine à coudre procède en répétant la couture de certains blocs du motif original un certain nombre de fois, le tout jusqu'à concurrence du nombre total de blocs nécessaires pour obtenir l'élongation désirée.

Les blocs "répétés" seront cousus immédiatement à la suite du bloc "original".

Si l'élongation devra être négative, on évitera au contraire de coudre certains parmi les blocs du motif de base, le nombre total des blocs ainsi supprimés étant fonction de ladite élongation.

Par ailleurs, il est évident que, pour obtenir des motifs élongés conservant, autant que possible, un aspect apparenté à celui des motifs de base correspondants, il conviendra d'opérer un choix approprié des blocs de points à répéter ou à supprimer en fonction de la nature du tracé élémentaire qui leur correspond une fois cousus sur le matériau à coudre et, pour chaque motif de base donné, de la position qu'ils occupent au sein de ce motif.

Selon l'invention, le processus qui vient d'être esquissé peut être réalisé avantageusement par la mise en oeuvre du système d'algorithmes ci-après.

La déposante a, en effet, trouvé que, pour une valeur donnée "I" de l'incrément d'élongation, le profil du motif élongé résultant restera le plus ressemblant et régulier, comparativement au profil du motif original, si chaque bloc de points du motif de base sera cousu, dans le motif élongé, un nombre R de fois tel que

$$R = \text{Entier de } (K/N + 1) \quad [\text{I}], \quad \text{si } |B|_N < |K|_N$$

ou

$$R = \text{Entier de } (K/N) \quad [\text{II}], \quad \text{si } |B|_N \geqq |K|_N.$$

Dans ces relations,

N est un nombre entier supérieur à 1, correspondant à l'inverse de la valeur de l'incrément I choisi: à titre d'exemple, si I = 25%, N sera égal à 4;

B = 0, 1, 2, ..., n - 1, est un nombre caractéristique de la position occupée par chaque bloc de points d'un motif de base comportant "n" blocs, entre le début (position 0) et la fin (position n - 1) de ce motif;

$|B|_N$ est la valeur absolue de B calculée dans un système numérique de base N;

Il convient de relever que le nombre R de fois qu'un bloc de points, existant dans le motif de base, qui devrait se retrouver dans le motif élongé, pourra être nul, ce qui signifie que ce bloc ne sera pas cousu dans le motif élongé: ce sera le cas d'un motif objet d'une élongation "négative", dont la longueur sera alors inférieure à la longueur du motif de base correspondant.

Selon l'invention, par la mise en oeuvre des algorithmes et conventions cités ci-dessus, le microprocesseur MP de la machine va déterminer, pour chaque bloc de points que comporte un motif décoratif standard déterminé, devant être l'objet d'une élongation positive, quel bloc devra être répété à la suite du bloc original, et combien de fois, aux fins d'obtenir le motif élongé du nombre choisi d'incréments.

Pareillement, dans le cas d'une élongation négative, le microprocesseur pourra fixer lesquels parmi les blocs de points du motif de base devront être supprimés pour obtenir le motif élongé de la quantité désiré tout en lui conservant un aspect restant apparenté, autant que possible, à celui du profil original.

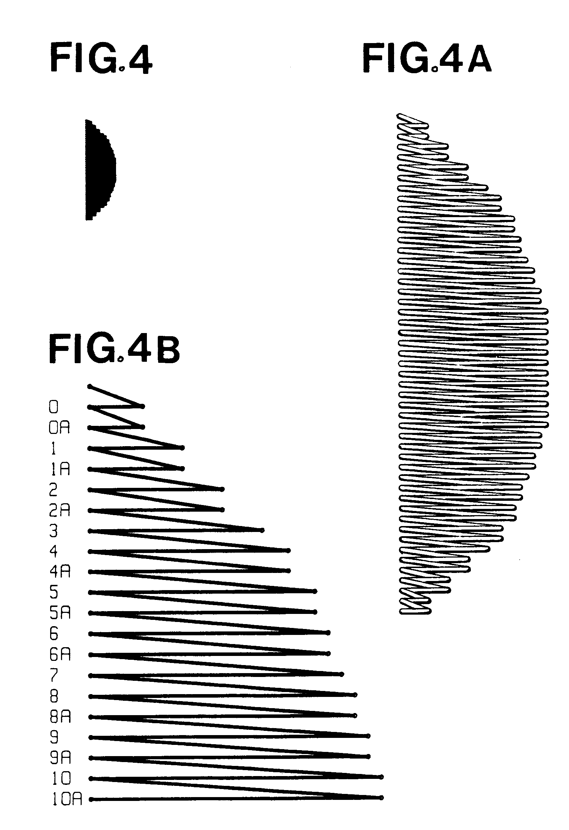

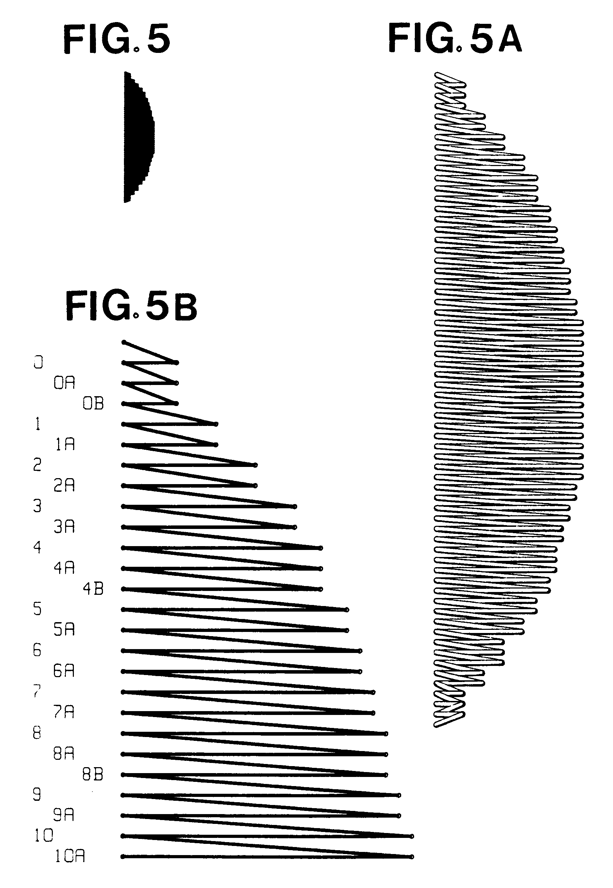

Cette procédure sera maintenant illustrée en se référant notamment aux figures 3 à 5 montrant, respectivement, sur la figure 3, un motif décoratif de longueur standard représenté à l'échelle 1:1, sur les figures 4 et 5, le même motif, élongé positivement de 75 %, respectivement de 125 %, par rapport à sa longueur d'origine, par la mise en oeuvre du procédé selon l'invention.

Comme on le voit plus particulièrement sur la figure 3B, le motif représenté sur la figure 3 est obtenu par couture de points de type "bourdon" et est composé de blocs juxtaposés, numérotés de 0 à 10 pour une meilleure compréhension des explications qui vont suivre.

Les figures 4B et 5B montrent en détail l'évolution de l'aspect que connait le motif de la figure 3 lorsqu'il est élongé positivement par la mise en oeuvre du procédé selon l'invention.

On voit, notamment sur la figure 4B que l'élongation de 75% a été obtenue en répétant la couture des blocs ci-après:

0; 1; 2; 4; 5; 6; 8; 9; 10,

Les blocs répétés sont désignés par le même chiffre que le bloc d'origine reproduit, complété de la lettre A, par exemple 0A.

Par contre, les blocs 3; 7, n'ont été cousus qu'une seule fois.

On remarquera également que chaque bloc supplémentaire a été répété immédiatement à la suite du bloc d'origine auquel il correspond.

Dans le cas de la figure 5B, correspondant au motif élongé de 125 %, on voit que cette élongation a été obtenue en répétant certains blocs de points deux fois et trois fois pour d'autres blocs.

C'est ainsi que les blocs suivants ont été répétés deux fois

1; 2; 3; 5; 6; 7; 9; 10,

alors que les blocs 0, 4 et 8 l'ont été chacun trois fois. Le second bloc répété dans ces deux cas est désigné au dessin par les chiffres 0B, 4B et 8B respectivement.

Dans le cas représenté, l'incrément I choisi étant de 25%, la valeur du facteur K est de 7 pour le motif élongé de 75 % (figures 4, 4A et 4B) et de 9 pour le motif élongé de 125 % (figures 5, 5A et 5B).

Examinons d'abord le cas du motif élongé de 75 % :

N étant égal à 4, la valeur du facteur $|K|_4$ devra être calculée dans un système numérique de base 4 tel que

$$K = 1\ 2\ 3\ 4\ 5\ 6\ 7\ 8$$
$$|K|_4 = 1\ 2\ 3\ 0\ 1\ 2\ 3\ 0$$

Pour K = 7 on voit que $|K|_4$ sera égal à 3.

Dans le même système de base 4, le nombre B, caractéristique de la position occupée par chaque bloc au sein du motif de base deviendra, pour les dix premiers blocs du motif,

$$B = 0\ 1\ 2\ 3\ 4\ 5\ 6\ 7\ 8\ 9$$
$$|B|_4 = 0\ 1\ 2\ 3\ 0\ 1\ 2\ 3\ 0\ 1$$

Tant que $|B|_4$ demeurera inférieur à $|K|_4$, le nombre de fois qu'il y aura lieu de coudre un même bloc devra être calculé par la relation "I" citée précédemment; il sera donné par la relation "II" en cas contraire.

Comme, dans l'exemple représenté, $|K|_4 = 3$ et K/N = 7/4 = 1,75, les blocs

0; 1; 2; 4; 5; 6; 8; 9;

etc...

devront être cousus un nombre R de fois tel que

$$R = \text{Entier de } (1 + K/N) = \text{Entier de } (1 + 1,75)$$
$$= 2.$$

Les blocs restants, 3 et 7, devront être cousus une seule fois, R étant égal à l'entier de K/N = 1,75, soit 1.

Les figures 4A et 4B montrent précisément l'allure du motif élongé qui serait obtenu lorsque la machine à coudre exécutera le motif en fonction des données ci-dessus.

Dans le cas du motif élongé de 125%, on aura K = 9, c'est-à-dire $|K|_4 = 1$ et K/N = 9/4 = 2,25.

Les blocs 0, 4 et 8, tels que $|B|_4 < |K|_4$, devront être cousus chacun un nombre de fois égal à

$$R = \text{Entier de } (1 + K/N) = \text{Entier de } (1 + 2,25)$$
$$= 3.$$

Les blocs 1; 2; 3; 5; 6; 7; 9; 10 tels que $|B|_4 \geqq |K|_4$ devront être cousus chacun un nombre de fois égal à l'entier de K/N = 2,25 soit 2 fois.

Les figures 5A et 5B montrent comment se présenterait le motif élongé obtenu avec une machine à coudre travaillant de la sorte.

Ce qui vient d'être dit concernant l'élongation positive d'un motif de base est évidemment aussi applicable, mutatis mutandis, dans le cas d'une élongation négative.

C'est ainsi que, dans le cas d'une élongation négative de 25%, et en faisant usage des mêmes algorithmes I et II et notations ci-dessus, on aura K = 3, $|K|_4 = 3$ et K/N = 0,75 : les blocs 0; 1; 2; 4; 5; 6; 8; 9; 10, tels que $|B|_4 < |K|_4$ devraient être cousus chacun un nombre de fois égal à

$$R = \text{Entier de } (K/N + 1) = \text{Entier de } (0,75 +$$
$$1) = 1,75$$

soit une seule fois.

Les blocs 3; 6; 9, tels que $|B|_4 = |K|_4 = 3$, devraient être cousus chacun un nombre de fois égal à l'entier de K/N = 0.75, soit 0 fois. Cela signifie que les blocs 3; 6; 9; etc. du motif de base seront supprimés dans le motif élongé négativement.

En pratique, l'ensemble des instructions que devra suivre le microprocesseur MP pour permettre à la machine d'exécuter un motif élongé est stocké dans une portion $P_1$ de la mémoire P (fig. 6) dans laquelle sont également placées notamment les instructions nécessaires à la commande des organes $M_1$ et $M_2$ dont dépend la formation des points des motifs susceptibles d'être sélectionnés à partir du clavier et de la machine.

Au dessin, $P_2$ représente schématiquement la zone de la mémoire P occupée par le premier bloc (bloc "0") d'un motif de base présélectionné en vue de son exécution sous forme élongée. S'agissant d'un motif à base de point "bourdon", la zone $P_2$ comportera quatre bytes d'instructions, soit un premier byte déterminant le transport du support à coudre, par exemple une pièce de tissu, sur la longueur d'un pas, un deuxième byte fixant l'amplitude du mouvement de jetée que devra effectuer la barre-aiguille 7 (figure 1), un troisième byte commandant le déplacement du tissu d'un nouveau pas, enfin un quatrième byte dont dépendra un nouveau mouvement de jetée de la barre-aiguille 7.

Si le motif de base sélectionné comprend n blocs de points, il y aura dans la mémoire P, n zones similaires à la zone $P_2$ que le pointeur $p_0$ associé au microprocesseur MP devra parcourir successivement, de l'entrée du motif (bloc de points $B_0$) à sa sortie (bloc $B_{n-1}$) pour que la machine puisse effectuer la couture de tout le motif.

Comme on le sait, l'actionnement ininterrompu de l'actuateur A, fait que, chaque fois que le microprocesseur MP a fini de lire les instructions du dernier bloc de points d'un motif sélectionné, il reprend la lecture de la section de mémoire concernée par ce motif de sorte que la machine va coudre une seconde fois le motif déjà cousu, et ainsi de suite.

Voyons maintenant ce qui se passe lorsqu'un usager ayant sélectionné un motif de base grâce au clavier 8 veut demander à la machine de coudre ce motif en élongation.

Selon l'invention, la fonction élongation de la machine n'est mise en oeuvre que si le microprocesseur reçoit un signal d'actionnement des deux touches 12 et 13 dans un délai maximum donné, par exemple de l'ordre de 2 sec., fixé par l'organe de temporisation D (fig. 6).

Si seule l'une des touches 12 et 13 aura été pressée dans ce délai, toute sollicitation successive de l'actuateur A se traduira par la simple couture en allongement, ou en raccourcissement, du motif présélectionné.

De façon analogue, l'actionnement successif des deux touches 12 et 13 dans un délai de temps supérieur au délai limite fixé par le temporisateur D donnera lieu à la couture du motif sélectionné dans sa dimension originale, la dimension de longueur fixée par actionnement de la touche 12 étant compensée par un accroissement correspondant obtenu en pressant la touche 13.

Par contre si, comme décrit, l'usager a pressé les deux touches 12 et 13 dans le délai prescrit, le microprocesseur engage le procesus d'élongation en suivant les indications de la section de programme $P_1$.

Ces indications sont représentées schématiquement sur la figure 7.

L'importance de l'élongation désirée et le type d'une telle élongation (positive ou négative) est fixée par l'usager par action de la touche 12 (élongation négative) ou de la touche 13 (élongation positive). Le nombre de pressions successives exercées sur l'une ou sur l'autre de ces touches fixera cette importance.

Comme l'incrément d'élongation possible lors de chaque actionnement des touches 12 et 13 est une constante, fixée en usine, par exemple 25%, le microprocesseur peut déterminer la valeur du coefficient K après chaque actionnement (séquence 100 en figure 7). La valeur du facteur N étant elle aussi connue, (séquence 101), le microprocesseur pourra calculer (séquence 102), pour chaque bloc de points du motif de base choisi, et au fur et à mesure du déplacement du pointeur $p_0$ de l'entrée (bloc $B_0$) vers la sortie (bloc $B_{n-1}$) de la section de programme relative à ce motif,

a) la valeur de K dans un système de base N, soit $|K|_N$,

b) la valeur du quantième de chaque bloc $B_0$ à $B_{n-1}$ dans le même système de base N, soit $|B|_4$.

Ainsi, chaque fois que $|K|_N$ sera supérieur à $|B|_N$ (séquence 103), le microprocesseur déterminera le nombre R de fois que le bloc considéré, appartenant au motif de base original, devra se retrouver dans le motif élongé en appliquant l'algorithme

R = Entier (K/N + 1)    [séquence 104]

Il fera usage du second algorithme

R = Entier (K/N)    [séquence 105]

en cas contraire.

La valeur de R ainsi obtenue est stockée dans le compteur $C_R$ (séquence 106) déjà cité (fig. 6).

Si cette valeur de R est différente de 0, par exemple égale à r (séquence 107), le microprocesseur MP va placer son pointeur au début de la section $P_2$ de la mémoire (séquence 108).

Ensuite, il va lire, dans la mémoire P, les instructions contenues dans la section $P_2$ et, commander la couture du bloc de points correspondant (séquence 109).

Il commande ensuite une décrémentation d'une unité de la valeur de R stockée dans le compteur $C_R$ (séquence 110).

Si la nouvelle valeur de R est toujours différente de 0, le microprocesseur va à nouveau procéder selon les séquences 107 à 110 ci-dessus et ainsi de suite tant que R demeurera supérieur à 0.

Il s'ensuit que tout bloc B du motif de base sera cousu successivement r fois dans le motif élongé.

Lorsque à devient égal à 0, la machine ne coudra plus (séquence 111) et le microprocesseur incrémentera d'une unité (séquence 112) le compteur de blocs $C_B$ déjà cité (séquence 113). Un tel compteur est, en effet, destiné à compter le nombre de blocs du motif de base sélectionné que le microprocesseur a rencontré en parcourant la section de mémoire concernée par ce motif, au fur et à mesure de la couture du motif élongé, qu'un bloc d'origine ait été repris dans le motif élongé, une ou plusieurs fois, ou non.

Par convention, le premier bloc sera caractérisé, dans le compteur $C_B$, par le chiffre B = 0 et le dernier bloc, d'un motif à n blocs, par le chiffre B = n-1.

Grâce à ce compteur $C_B$, le microprocesseur saura, à chaque instant, dans quelle partie du motif de base il opére.

Si, à un instant donné, la valeur mémorisée dans le compteur $C_B$ devient égale à n, (séquence 114), le microprocesseur sait qu'il a atteint la fin de la section de mémoire du motif de base et que, de ce fait, la couture du motif élongé est terminée (séquence 115).

En variante, il serait possible d'obtenir ce même résultat sans connaître, "à priori", la valeur n ci-dessus et de prévoir, à cet effet, que les instructions de couture de chaque motif comportent, au terme de ces instructions, un "flag" indiquant au microprocesseur que le motif en question est terminé.

Dans un cas comme dans l'autre, le microprocesseur replacera alors le pointeur $p_0$ à l'entrée (bloc 0) de la section $P_2$ de programme du motif de base pour nouvelle exécution du motif élongé correspondant, cela bien entendu si l'usager sollicite encore l'actuateur A.

Si la valeur mémorisée dans le compteur $C_B$ est inférieure à n, par exemple égale à m, le microprocesseur sait qu'il devra recommencer ses opérations de calcul et décisionnelles, correspondant aux séquences du programme 102 à 114, avec la nouvelle valeur m de bloc qu'il va devoir transformer en base N (séquence 116) pour la comparer à $|K|_N$ et ainsi de suite tant que la valeur du compteur $C_B$ restera inférieure à n-1 (le nombre caractérisant le dernier bloc d'un motif ayant n blocs étant égal à n-1 si le premier bloc est caractérisé par le chiffre 0).

Le motif élongé obtenu correspondra effectivement à celui des figures 4A et 5A dans le cas des élongations de 75% et 125%. On voit que les motifs élongés conservent effectivement un profil général s'apparentant à celui du motif de base dont ils sont issus (figure 3A).

On remarquera notamment, en comparant les tracés des motifs de base et élongés représentés aux fig. 3, 4 et 5, que les irrégularités relatives de profil apparaissant sur les motifs élongés sont de très faible importance: il convient encore de relever que de telles irrégularités ne seront, en pratique, pas plus marquées que celles produites naturellement lors de la couture proprement dite et qui dépendent, comme on le sait, de la structure du matériau à coudre (épaisseur, nature du matériau etc).

On signalera encore que le programme décrit, grâce auquel la machine à coudre selon l'invention peut mettre en oeuvre et exécuter la fonction "élongation" de la manière expliquée précédemment, permet également de supprimer la sélection de cette fonction, notamment tant qu'elle n'a pas débuté. Il suffira, à cet effet, d'exercer une nouvelle pression sur les deux touches 12 et 13 dans le délai de deux secondes cité.

Bien que dans la description qui précède et sur les dessins auxquels elle fait référence, on n'ait envisagé que le cas où les touches permettant la mise en oeuvre de la fonction élongation soient les mêmes que celles dont il peut être fait usage pour obtenir un simple allongement ou raccourcissement d'un motif de base, il est évident que, selon une variante d'exécution de la machine à coudre selon l'invention, il serait possible de prévoir deux paires de touches distinctes servant, respectivement et exclusivement, l'une à la commande de la fonction allongement/raccourcissement de tout motif de base présélectionné, l'autre à la commande de la fonction "allongement".

## Revendications

1. Procédé de commande d'une machine à coudre, en particulier d'une machine comprenant une aiguille (6) mobile axialement, un dispositif (M₂) d'entraînement de l'aiguille en un mouvement axial alterné, un mécanisme de commande du déplacement relatif, en translation, de l'aiguille et du matériau à coudre, un capteur de boucle et son dispositif de commande (M₁), des moyens (P) pour piloter en synchronisme lesdits mécanismes et le dispositif agencés de manière à coudre sur le matériau des motifs formés chacun par une pluralité de blocs de points et dont au moins une portion de leur profil englobe au moins une série de deux points adjacents résultant d'un déplacement relatif du tissu et de l'aiguille, d'amplitude et/ou d'orientation différentes de point à point, cette machine comportant un organe (MP) de commande desdits moyens (P) et dudit dispositif permettant d'accroître, respectivement de diminuer la longueur de base d'un motif tout en conservant constante la densité des points cousus, procédé caractérisé en ce que, pour accroître la longueur du motif, on répète au moins une fois la couture d'au moins certains blocs de points du motif de base, immédiatement à la suite du bloc à répéter, alors que, pour diminuer la longueur du motif de base, on supprime la couture d'au moins certains des blocs du motif de base, le nombre total des blocs du motif ainsi modifié étant égal au nombre de blocs du motif de base multiplié par le rapport de la longueur désirée pour le motif modifié sur la longueur du motif de base.

2. Procédé selon la revendication 1, caractérisé en ce que chaque accroissement, respectivement chaque diminution de la longueur de base du motif choisi est un multiple d'un incrément unitaire I, de valeur constante et prédéterminée, et en ce que chaque bloc de points du motif de base est répété un nombre
R - 1 de fois, avec

$$R = \text{Entier de } (K/N + 1) \quad [1] \quad \text{si } |B|_N < |K|_N$$
ou
$$R = \text{Entier de } (K/N) \quad [2] \quad \text{si } |B|_N \geqq |K|_N,$$
relations dans lesquelles

N nombre entier >1, de valeur correspondant à l'inverse de la valeur de l'incrément unitaire I;

B = 0, 1, 2,..., n - 1: nombre caractéristique de la position occupée par chaque bloc de points d'un motif de base de "n" blocs, entre le début (position 0) et la fin (position n - 1) de ce motif;

$|B|_N$ = valeur absolue de B calculée dans un système numérique de base N;

K = rapport entre la longueur totale du motif et la valeur de l'incrément unitaire;

$|K|_N$ = valeur absolue de K calculée dans un système numérique de base N

3. Machine à coudre informatisée, comprenant :
   - des premiers moyens (M₁, M₂) pour commander, d'une part, le mouvement axial alterné d'une aiguille en vue de la faire pénétrer dans le matériau à coudre, d'autre part, un capteur de boucle destiné à coopérer avec cette aiguille en vue d'obtenir la formation d'un point de couture,
   - des seconds moyens (M₁, M₂) pour commander des déplacements relatifs de l'aiguille et du matériau à coudre selon deux directions orthogonales d'amplitude déterminée dans chaque direction,
   - au moins une mémoire électronique (P) pour le stockage des instructions de couture correspondant à divers motifs à coudre, ces instructions étant susceptibles d'être lues sélectivement et séquentiellement pour assurer le pilotage desdits seconds moyens,
   - des premiers organes (8) de sélection desdits motifs,
   - un microprocesseur (MP) coopérant avec ladite mémoire (P) pour en lire les instructions de couture de tout motif sélectionné et piloter en conséquence les seconds moyens de commande,
   - des troisièmes moyens imposant au microprocesseur de commander, à partir des instructions stockées dans la mémoire, une exécution de motifs de longueur différente de celle correspondant auxdites instructions,
   - des seconds organes (12,13) de sélection de la variation désirée pour la longueur d'exécution de tout motif présélectionné,
   caractérisée en ce que lesdits troisièmes moyens englobent, stockées dans la mémoire (P), d'une part, une première suite d'instructions informatisées (106 à 110), obligeant le microprocesseur (MP) à une lecture répétée des instructions de couture d'au moins certains parmi les blocs de points que comporte le motif sélectionné tel que mémorisé de manière à obtenir une répétition correspondante de la couture de ces blocs au sein du motif de longueur modifiée en

fonction de la variation sélectionnée par actionnement desdits seconds organes (12, 13), et, d'autre part, au moins une seconde suite d'instructions (100 à 105) informatisées fixant le nombre de fois que devra être cousu, dans le motif modifié, chaque bloc appartenant au motif original, ainsi que la localisation de ces blocs au sein du mo tif modifié, le tout de manière que le motif élongé cousu sur ledit matériau présente la longueur modifiée requise tout en conservant une forme générale s'apparentant à celle du motif de base stocké dans la mémoire et dont il est issu.

4. Machine selon la revendication 3, caractérisée en ce que ladite seconde suite d'instructions informatisées englobe des algorithmes (103, 104, 105) donnant le nombre R d'exécutions, dans le motif élongé, de chaque bloc de points du motif de base en fonction de la position du bloc au sein de ce motif de base ainsi que de la longueur désirée pour le motif élongé.

5. Machine selon la revendication 4, caractérisée en ce que lesdits troisièmes moyens englobent, de plus, un premier compteur (113) des blocs du motif de base, un second compteur (106) destiné à enregistrer, pour chaque bloc du motif de base le nombre R de fois qu'il devra être exécuté, un organe (107) ramenant le microprocesseur (P) dans la partie du programme correspondant au début des instructions de couture du bloc devant être lu, tant que le nombre R indiqué par le second compteur (106) est supérieur à 0, un organe (108, 109) commandant au microprocesseur de lire les instructions de couture de ce bloc de points, un organe (110) décrémentant d'une unité le second compteur à la suite de cette lecture, un organe (112) incrémentant d'une unité le compteur de blocs (113) lorsque la valeur mémorisée dans le second compteur (106) est nulle, ce compteur mémorisant ainsi, à chaque instant, la position du bloc du motif de base pour lequel il y a lieu de calculer le nombre R d'exécutions au sein du motif élongé.

**Patentansprüche**

1. Verfahren zur Steuerung einer Nähmaschine, insbesondere einer Maschine, die eine axial bewegliche Nadel (6), eine Vorrichtung ($M_2$) zum Antreiben der Nadel in einer alternierenden Axialbewegung, einen Mechanismus zur Steuerung der translatorischen Relativverschiebung der Nadel und des zu nähenden Materials, einen Schleifenfänger und seine Steuervorrichtung ($M_1$), Einrichtungen (P) zum synchronen Steuern der genannten Mechanismen und der Vorrichtung aufweist, die angelegt sind, daß sie auf dem Material Motive nähen, von denen jedes aus einer Vielzahl von Punkteblöcken gebildet ist und von denen mindestens ein Abschnitt ihres Profils mindestens eine Folge von zwei benachbarten Punkten umfaßt, die sich aus einer Relativverschiebung des Stoffes und der Nadel mit einer von Punkt zu Punkt unterschiedlichen Weite und/oder Orientierung ergibt, wobei die Maschine weiter ein Organ (MP) zur Steuerung der Einrichtungen (P) und der genannten Vorrichtung aufweist, das es ermöglicht, die Länge der Basis jedes Motivs unter Konstanthaltung der Dichte der genähten Punkte zu vergrößern bzw. zu verkleinern, wobei das Verfahren

dadurch **gekennzeichnet** ist, daß man zum Vergrößern der Länge des Motivs das Nähen mindestens bestimmter Punkteblöcke des Basismotivs mindestens ein Mal unmittelbar im Anschluß an den zu wiederholenden Block wiederholt, während man zum Verkleinern der Länge des Basismotivs das Nähen mindestens bestimmter Blöcke des Basismotivs ausläßt, wobei die Gesamtzahl der Blöcke des so modifizierten Motivs gleich der Anzahl der Blöcke des Basismotivs, multipliziert mit dem Verhältnis der für das modifizierte Motiv gewünschten Länge, zur Länge des Basismotivs ist.

2. Verfahren nach Anspruch 1,
dadurch **gekennzeichnet**, daß jede Vergrößerung bzw. jede Verkleinerung der Basislänge des gewählten Motivs ein Vielfaches eines Einheitsinkrementes (I) mit konstantem und vorbestimmtem Wert ist, und daß jeder Punkteblock des Basismotivs (R - 1-mal) wiederholt wird, wobei:

R = die ganze Zahl von (K/N + 1) ist,     [1], wenn $B|_{N} < |K|_N$

oder

R = die ganze Zahl von (K/N) ist     [2], wenn $B|_{N} \geqq |K|_N$;

wobei in diesen Beziehungen:

N eine ganze Zahl >1 ist, mit einem Wert, der dem umgekehrten Wert des Wertes des Einheitsinkrements I entspricht;

B = 0, 1, 2, ..., n - 1 ist: Nummer der charakteristischen Position, die von jedem Punkteblock eines Basismotivs von "n" Blöcken zwischen dem Anfang (Position 0) und dem Ende (Position n - 1) des betreffenden Motivs besetzt wird;

$|B|_N$ = Absolutwert von B, berechnet in einem numerischen System mit Basis N;

K = Beziehung zwischen der Gesamtlänge des Motivs und dem Wert des Einheitsinkrements; und

$|K|_N$ = Absolutwert von K, berechnet in einem numerischen System mit Basis N.

3. Rechnergesteuerte Nähmaschine, aufweisend:

- erste Einrichtungen (M₁, M₂) zum Steuern einerseits der alternierenden Axialbewegung einer Nadel, um sie in das zu nähende Material eindringen zu lassen, und andererseits eines Schleifenfängers, der zum Zusammenwirken mit der Nadel bestimmt ist, um die Bildung eines Nähpunktes zu erzielen;

- zweite Einrichtungen (M₁, M₂) zum Steuern der Relativverschiebungen der Nadel und des zu nähenden Materials entlang zweier orthogonaler Richtungen mit in jeder Richtung bestimmter Weite;

- mindestens einen elektronischen Speicher (P) zum Speichern von Nähanweisungen entsprechend verschiedener zu nähender Motive, wobei die Anweisungen geeignet sind, selektiv und sequentiell gelesen zu werden, um die Steuerung der zweiten Einrichtungen zu bewirken;

- erste Organe (8) zur Auswahl der Motive;

- einen Mikroprozessor (MP), der mit dem Speicher (P) zusammenwirkt, um daraus die Nähanweisungen für jedes gewählte Motiv auszulesen und dementsprechend die zweiten Steuereinrichtungen zu steuern;

- dritte Einrichtungen, die den Mikroprozessor anhand der im Speicher abgelegten Anweisungen zwingen, eine Ausführung der Motive mit einer Länge zu steuern, die sich von derjenigen unterscheidet, die den genannten Anweisungen entspricht;

- zweite Organe (12, 13) zum Wählen der Änderung, die für die Ausführungslänge jedes vorgewählten Motivs gewünscht wird;

dadurch **gekennzeichnet**, daß die dritten Einrichtungen, im Speicher (P) untergebracht, einerseits eine erste Folge rechnerspezifischer Anweisungen (106-110) aufweisen, die den Mikroprozessor (MP) zu einem wiederholten Lesen der Nähanweisungen mindestens bestimmter Blöcke unter den Punkteblöcken zwingen, welche das gewählte Motiv, so wie es gespeichert ist, aufweist, derart, daß eine entsprechende Wiederholung des Nähens dieser Blöcke innerhalb des Motivs mit einer Länge erhalten wird, die in Abhängigkeit von der durch die Betätigung der zweiten Organe (12, 13) gewählten Änderung modifiziert ist, und wobei die dritten Einrichtungen andererseits mindestens eine zweite Folge von rechnerspezifischen Anweisungen (100-105) aufweisen, die sowohl die Anzahl der Nähgänge, durch die jeder zum Originalmotiv gehörige Block im modifizierten Motiv genäht werden soll, als auch die Stelle dieser Blöcke innerhalb des modifizierten Motivs bestimmen, und dies alles derart, daß das auf das Material genähte verlängerte Motiv die geforderte modifizierte Länge besitzt, aber gleichzeitig eine Gesamtform behält, die wie diejenige des im Speicher abgelegten Basismotivs aussieht, aus dem das Motiv hervorgegangen ist.

4. Maschine nach Anspruch 3,
dadurch **gekennzeichnet**, daß die zweite rechnerspezifische Anweisungsfolge Algorithmen (103, 104, 105) umfaßt, die die Anzahl (R) der Ausführungen jedes Punkteblockes des Basismotivs im verlängerten Motiv angeben, und zwar in Abhängigkeit sowohl von der Position des Blockes innerhalb des Basismotivs, als auch von der für das verlängerte Motiv gewünschten Länge.

5. Maschine nach Anspruch 4,
dadurch **gekennzeichnet**, daß die dritten Einrichtungen weiter aufweisen: einen ersten Zähler (113) zum Zählen der Blöcke des Basismotivs; einen zweiten Zähler (106), der dazu bestimmt ist, für jeden Block des Basismotivs die Anzahl der Nähgänge (R) zu registrieren, mit denen der Block ausgeführt werden soll; ein Organ (107), das den Mikroprozessor (P) in denjenigen Abschnitt des Programms zurückbringt, der dem Anfang der Nähanweisungen des Blockes entspricht, die gelesen werden müssen, solange die durch den zweiten Zähler (106) angegebene Anzahl R größer als 0 ist; ein Organ (108, 109), das dem Mikroprozessor befiehlt, die Nähanweisungen dieses Punkteblockes zu lesen; ein Organ (110), das nach diesem Lesen den zweiten Zähler um eine Einheit dekrementiert; ein Organ (112), das den Blockzähler (113) um eine Einheit inkrementiert, wenn der im zweiten Zähler (106) gespeicherte Wert Null ist, wobei dieser Zähler jedesmal dann die Position des Blockes des Basismotivs speichert, wenn die Anzahl (R) der Durchführungen innerhalb des verlängerten Motivs berechnet werden muß.

**Claims**

1. Method of controlling a sewing machine, particularly a machine comprising an axially movable needle (6), a device (M₂) for driving the needle in a reciprocating axial movement, a mechanism for controlling the relative translational movement between the needle and the material to be sewn, a loop catcher and its control device (M₁), means (P) for the synchronised control of said mechanisms and the device, which are arranged so as to sew patterns on the material, each pattern being formed by a plurality of blocks of stitches and at least a portion of the contour of the pattern incorporating at least one series of two adjacent stitches resulting from a relative displacement between the fabric and the needle, the amplitude and/or the orientation of which differs from stitch to stitch, the machine comprising an element (MP) for controlling said means (P) and said device enabling the basic length of a pattern to be increased or reduced whilst maintaining a constant density of the sewn stitches, the method being characterised in that, in order to increase the length of the pattern, the sewing of at least certain blocks of stitches of the basic pattern is repeated at least once, immediately after the block to be repeated, whereas, in order to reduce the length of the basic pattern, the sewing of at least certain blocks of the basic pattern is omitted, the total number of blocks of the thus modified pattern being equal to the number of blocks of the basic pattern multiplied by the ratio of the desired length of the modified pattern to the length of the basic pattern.

2. Method according to claim 1, characterised in that each increase or each reduction in the basic length of the selected pattern is a multiple of an incremental unit I, having a constant and predetermined value, and in that each block of stitches of the basic pattern is repeated a number R - 1 of times, where

$$R = \text{Integer calculated by } (K/N + 1) \quad [1] \text{ if } |B|_N < |K|_N$$

or

$$R = \text{Integer calculated by } (K/N) \quad [2] \text{ if } |B|_N \geqq |K|_N,$$

in which relationships

N is a whole number > 1, the value of which corresponds to the inverse of the value of the incremental unit I;

B = 0, 1, 2, ..., n-1: the characteristic number of the position occupied by each block of stitches of a basic pattern of 'n' blocks, between the start (position 0) and the end (position n-1) of the pattern;

$|B|_N$ = absolute value of B calculated in a base N numerical system;

K = ratio between the total length of the pattern and the value of the incremental unit;

$|K|_N$ = absolute value of K calculated in a base N numerical system.

3. Computerised sewing machine comprising:
   - first means (M₁, M₂) for controlling, on the one hand, the reciprocating axial movement of a needle with the aim of making it penetrate into the material to be sewn, and, on the other hand, a loop catcher intended to cooperate with this needle with the aim of obtaining the formation of a sewing stitch,
   - second means (M₁, M₂) for controlling the relative displacements between the needle and the material to be sewn in two orthogonal directions of a given amplitude in each direction,
   - at least one electronic memory (P) for storing sewing instructions corresponding to various patterns to be sewn, these instructions being capable of being read selectively and sequentially to ensure the control of said second means,
   - first elements (8) for selecting said patterns,
   - a microprocessor (MP) cooperating with said memory (P) in order to read from it the sewing instructions for any selected pattern and to control the second control means accordingly,
   - third means causing the microprocessor to control, on the basis of instructions stored in the memory, the execution of patterns, the length of which is different from the length corresponding to said instructions,
   - second elements (12, 13) for selecting the desired variation in the length of execution of any preselected pattern,

characterised in that said third means incorporate, stored in the memory (P), on the one hand, a first sequence of computerised instructions (106 to 110), requiring the microprocessor (MP) repeatedly to read the sewing instructions of at least some of the blocks of stitches which make up the selected pattern as stored so as to obtain a repetition corresponding to the sewing of these blocks within the pattern, the length of which is modified as a function of the variation selected by the actuation of said second elements (12, 13), and, on the other hand, at least a second sequence of computerised instructions (100 to 105) specifying the number of times each block belonging to the original pattern must be sewn in the modified pattern, as well as the location of these blocks within the modified pattern, all this such that the elongated pattern sewn on said material has the required modified length while retaining a general shape similar to that of the basic pattern stored in the memory and from which it resulted.

4. Machine according to claim 3, characterised in that said second sequence of computerised instructions incorporates algorithms (103, 104, 105) specifying the number R of times, in the elongated pattern, each block of stitches of the basic pattern is executed as a function of the position of the block within the basic pattern, as well as the desired length of the elongated pattern.

5. Machine according to claim 4, characterised in that said third means also incorporate a first counter (113) for the blocks of the basic pattern, a second counter (106) intended to record, for each block of the basic pattern, the number R of times which it must be executed, an element (107) returning the microprocessor (P) to the part of the program corresponding to the start of the sewing instructions for the block to be read, for as long as the number R indicated by the second counter (106) is greater than 0, an element (108, 109) causing the microprocessor to read the sewing instructions for this block of stitches, an element (110) decrementing the second counter by one unit after this reading operation, an element (112) incrementing the block counter (113) by one unit if the value stored in the second counter (106) is zero, this counter thus, at all times, storing the position of the block of the basic pattern for which it is necessary to calculate the number R of times the block is executed within the elongated pattern.

# FIG.1

# FIG.2

# FIG.3

# FIG.3A

# FIG.3B

# FIG.4

# FIG.4A

# FIG.4B

0
0A
1
1A
2
2A
3
4
4A
5
5A
6
6A
7
8
8A
9
9A
10
10A

# FIG. 5

# FIG. 5A

# FIG. 5B

# FIG.6

FIG. 7